Europäisches Patentamt

European Patent Office

Office européen des brevets

(19)

(11) Veröffentlichungsnummer: **0 203 340 B1**

## EUROPÄISCHE PATENTSCHRIFT

(12)

(45) Veröffentlichungstag der Patentschrift: **06.03.91**

(51) Int. Cl.⁵: **B01D 8/00**

(21) Anmeldenummer: **86105258.7**

(22) Anmeldetag: **16.04.86**

(54) **Verfahren zur Entfernung leichter flüchtiger Verunreinigungen aus Gasen.**

(30) Priorität: **22.05.85 DE 3518283**

(43) Veröffentlichungstag der Anmeldung:
**03.12.86 Patentblatt 86/49**

(45) Bekanntmachung des Hinweises auf die
Patenterteilung:
**06.03.91 Patentblatt 91/10**

(84) Benannte Vertragsstaaten:
**AT BE CH FR GB IT LI NL SE**

(56) Entgegenhaltungen:
**FR-A- 2 134 845        US-A- 2 177 139**
**US-A- 3 364 654        US-A- 3 585 807**
**US-A- 3 721 101        US-A- 4 191 022**
**US-A- 4 479 927        US-A- 4 506 513**

**CHEMICAL ABSTRACTS, Band 84, Nr. 18, 13.
Mai 1976, Seite 125, Zusammenfassung Nr.
123972k, Columbus, Ohio, US**

(73) Patentinhaber: **MESSER GRIESHEIM GMBH
Hanauer Landstrasse 330
W-6000 Frankfurt/Main(DE)**

(72) Erfinder: **Eschwey, Manfred, Dr.
Kreuzbergstrasse 7H
W-4000 Düsseldorf 31(DE)**
Erfinder: **Schleser, Werner
Uhlandstrasse 25
W-4100 Duisburg 14(DE)**

EP 0 203 340 B1

## Beschreibung

Die Erfindung betrifft ein Verfahren zur Entfernung leichter flüchtiger Verunreinigungen aus Gasen nach dem Oberbegriff des Anspruches 1.

Wirksame konventionelle Reinigungsverfahren wie Destillation, Rektifikation und Adsorption lassen sich wirtschaftlich nur bei großen Gasmengen durchführen. Wendet man derartige Reinigungsverfahren bei kleinen Gasmengen an und werden zudem extrem hohe Reinheitsanforderungen gestellt, werden die gereinigten Produktgase außerordentlich teuer. Dies ist z.B. der Fall bei der Herstellung und Reinigung von Dotiergasen für die Halbleiterindustrie. Noch komplizierter werden diese Bedingungen, wenn die zu reinigenden Gase hochtoxisch, selbstendzündlich oder zum Selbstzerfall neigend sind.

Beispiele für solche Gase sind Silan, Disilan, Dichlorsilan, German, Boran, Arsin, Chlorwasserstoff, Ammoniak, Tetrafluormethan und verschiedene metallorganische Verbindungen. Bei den verunreinigenden Störkomponenten handelt es sich neben Wasserstoff fast immer um Luftgase, also um Stickstoff, Sauerstoff, Edelgase, Kohlenwasserstoff, Kohlendioxid und Kohlenmonoxid. Diese Verunreinigungen sind in der Regel leichter flüchtig als die zu reinigenden Gase.

Der Erfindung liegt die Aufgabe zugrunde, ein einfaches und wirtschaftliches Verfahren zu schaffen, mit dem leichter flüchtige Verunreinigungen auch aus kleinen Mengen zu reinigender Gase hochwirksam in einem einzigen Schritt bis unter die analytische Nachweisgrenze entfernt werden können.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Voraussetzung für die hohe Wirksamkeit des erfindungsgemäßen Verfahrens ist das Arbeiten mit einem dynamischen Vakuum, d.h., die nichtkondensierten leichter flüchtigen Verunreinigungen werden ständig aus dem Vakuumsystem abgezogen, so daß sie keine Möglichkeit haben, zumindest teilweise in dem auskondensierten zu reinigenden Gas wieder in Lösung zu gehen. Zur Erzeugung des dynamischen Vakuums dient vorzugsweise eine Gastransfervakuumpumpe. Eine weitere Bedingung für die Wirksamkeit des erfindungsgemäßen Verfahrens ist, daß die Dampfdruckkurven des zu reinigenden Gases und der zu entfernenden Verunreinigungen genügend weit auseinander liegen. Dies ist bei Wasserstoff und Luftgasen als Hauptverunreinigungen zwar in der Regel der Fall, doch gibt es Ausnahmen, beispielsweise die Abtrennung von Kohlendioxid aus Chlorwasserstoff. In einem solchen Fall, bei dem die abzutrennende Verunreinigung sogar schwerer flüchtig ist als das zu reinigende Gas, müssen andere Reinigungsverfahren angewendet werden. Sinnvollerweise wird man daher das erfindungsgemäße Verfahren immer dann mit konventionellen Reinigungs- und Trennverfahren kombinieren, wenn Verunreinigungen vorhanden sind, die sich mit dem erfindungsgemäßen Verfahren nicht oder nur wenig abreichern lassen. Es ergeben sich dann zwar mehrstufige, aber immer noch sehr effektiv und einfach arbeitende Reinigungsverfahren.

Von dem Prinzip des erfindungsgemäßen Verfahrens wird auch in Kühlfallen Gebrauch gemacht, wie sie beispielsweise aus der DE-OS 25 20 941 bekannt sind. Derartige Kühlfallen dienen jedoch ausschließlich zur Verbesserung und Aufrechterhaltung eines Vakuums. Aus Chemical Abstracts, Band 84, Nr. 18, 13.Mai 1976, Seite 125, Zusammenfassung Nr. 123 972 k, ist es auch bekannt, in Kühlfallen ein Gemisch aus einem kondensierbaren Stoff, z.B. Nitroethan, und einem nicht kondensierbaren Gas, z.B. Stickstoff, zu trennen, um ein Eindringen des kondensierbaren Stoffes in die Vakuumpumpe und die Atmosphäre zu vermeiden.

Die praktischen Erprobungen des erfindungsgemäßen Verfahrens haben ergeben, daß es eine überraschend effektive Abtrennung von Verunreinigungen aus kondensier baren Substanzen, insbesondere im Spurenbereich, ermöglicht.

Bei dem erfindungsgemäßen Verfahren der Dünnschichtkondensation in einem dynamischen Vakuum handelt es sich um einen typisch irreversiblen Prozeß, nämlich das Ausströmen eines Gases in ein Vakuumsystem. Das System befindet sich demnach in einem thermischen Ungleichgewicht. Durch das kontinuierliche Entfernen der Verunreinigungen, also durch die Bildung eines dynamischen Vakuums, wird jedoch ein stabiler stationärer Zustand erreicht. Dieser stationäre Zustand eines kontinuierlich fließenden Systems unterscheidet sich grundsätzlich von der Einstellung eines annähernd thermischen Gleichgewichtes, wie es zur Erzielung günstiger Trenn- bzw. Reinigungseffekte bei bekannten thermischen Trennverfahren im Vakuum, z.B. Rektifikation oder fraktionierte Kondensation, notwendig ist.

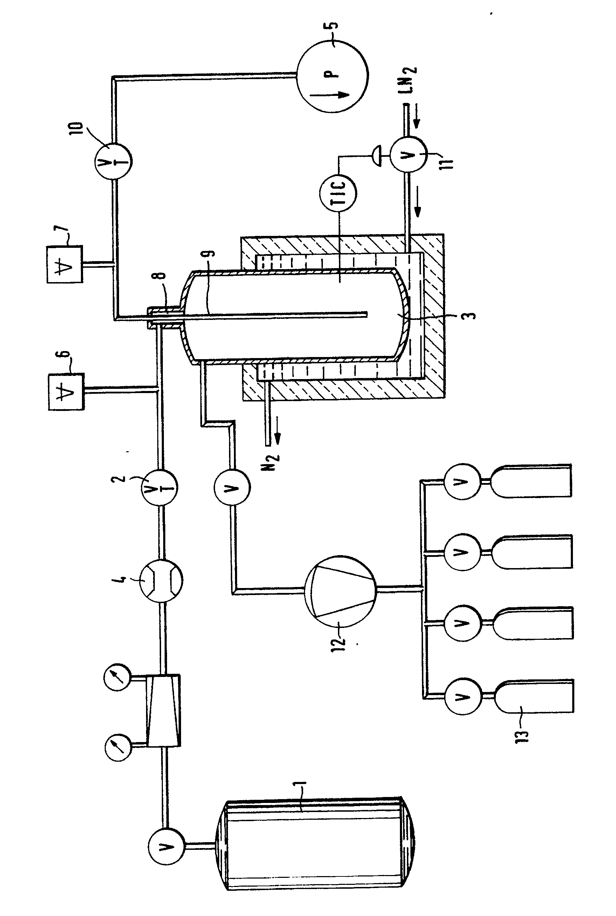

Die Zeichnung veranschaulicht ein Ausführungsbeispiel der Erfindung in schematischer Form.

Das zu reinigende Gas wird gasförmig aus einem Vorratsbehälter 1 entnommen und über einen Durchflußmesser 4 und ein Drosselventil 2 in ein Vakuumsystem, bestehend aus einem Kondensator 3 und einer Gastransfervakuumpumpe 5, entspannt. Als Kondensatoren können alle unter den besonderen Verhältnissen der Vakuumtechnik entwickelten Bauformen eingesetzt werden. Die mittlere Temperatur im Kondensator 3 wird durch eine geregelte Kühlung mit flüssigem Stickstoff mittels der Regeleinrichtung 11 auf einer dem Trennproblem angepaßten Temperatur von vorzugsweise -100 bis -200° C gehalten. An der Kaltfläche des Kondensators 3 wird die zu reinigende Komponente auskondensiert, d.h. in der Regel in Form dünner Schichten ausgefroren. Gleichzeitig werden die leichter flüchtigen Verunreinigungen über das Steigrohr 9 durch die Gastransfervakuumpumpe 5 abgesaugt. Das Steigrohr 9 bildet mit dem Eintritt des Kondensators 3 einen Ringspalt 8, durch welchen das zu reinigende Gas aus dem Vorratsbehälter 1 in den Kondensator 3 gelangt. Zur Kontrolle des Vakuums dienen Druckmesser 6 und 7, ein Drosselventil 10 dient zur Einstellung der Saugleistung der Gastransfervakuumpumpe 5. Nach Beendigung des Prozesses wird das gereinigte Gas mittels eines Kompressors 12 oder durch Umkondensation in Druckbehälter 13 überführt.

Nachfolgend werden zwei Ausführungsbeispiele beschrieben.

Beispiel 1: Reinigung von Monosilan.

In den auf $10^{-3}$ mbar evakuierten Kondensator 3 mit einem Volumen von 10l läßt man bei laufender Gastransfervakuumpumpe 5 Monosilan durch den Ringspalt 8 einströmen.Die mittlere Temperatur an der Kaltfläche des Kondensators wird durch flüssigen Stickstoff mittels der Regeleinrichtung 11 auf -150 bis -196° C eingestellt. Am Durchflußmesser 4 und Drosselventil 2 wird ein konstanter Gasstrom zwischen 100 und 1000 l $h^{-1}$ unter Normalbedingungen eingestellt. Der Druck am Eingang des Kondensators 3 kann 100 bis 600 mbar betragen, am Kondensatorausgang wird sich ein Druck zwischen 10 und $10^{-2}$ mbar einstellen. Die Saugleistung der Gastransfervakuumpumpe 5 wird mit Hilfe des Drosselventils 10 zwischen 5 und 15 m³ $h^{-1}$ entsprechend der Menge der abzupumpenden Gase eingestellt. Die genannten bevorzugten Bereiche für einige Verfahrensparameter sind im wesentlichen apparatebedingt. Daneben beeinflussen naturgemäß in hohem Maße die stark variierenden Anteile an schwer kondensierbaren Komponenten im eingespeisten Silan die Wahl bzw. Einstellung der Verfahrensparameter.

Die Reinigungsanalyse des Monosilans erfolgte gaschromatographisch mit Hilfe eines hochempfindlichen Wärmeleitfähigkeitsdedektors. Zur Kontrolle wurden Analysen mit Hilfe einer Kopplung von Gaschromatograph und Massenspektrometer durchgeführt. Beide Analysenverfahren ergaben praktisch die folgenden übereinstimmenden Werte:

Analyse eingesetztes Silan          Analyse nachgereinigest Prod.

| | | | |
|---|---|---|---|
| $H_2$ | 338 | vpm | < 10 vpm |
| $N_2$ | 80 | vpm | < 1 vpm |
| $Ar+O_2$ | 20,5 | vpm | < 1 vpm |
| $CH_4$ | 20 | vpm | < 1 vpm |

Beispiel 2:

Nachreinigung von Chlorwasserstoff.Entscheidend für das Gelingen der Nachreinigung von Chlorwasserstoff ist die vorherige völlige Entfernung der Störkomponenten Wasser und Kohlendioxid. Wasser würde Salzsäure bilden und Kohlendioxid ist schwerer flüchtig als Chlorwasserstoff. Hierfür seien die wichtigsten Verfahrensparameter und Analysenergebnisse genannt:

In den Kondensator einströmende
HCl Menge: 400 bis 1200 l $h^{-1}$
Druck am Kondensatoreingang: 200 bis 800 mbar
Druck am Kondensatorausgang: 0,8 bis 0,01 mbar
Temperatur des Kondensators: -130 bis -196° C

| Analyse eingesetztes HCl | | Erreichte Endreinheit |
|---|---|---|
| H$_2$ | 214 vpm | < 10 vpm |
| O$_2$+Ar: | 23 vpm | < 1 vpm |
| N$_2$: | 166 vpm | < 1 vpm |

Ba/Hi

**Ansprüche**

1. Verfahren zur Entfernung leichter flüchtiger Verunreinigungen bis unter die analytische Nachweisgrenze aus Gasen, um diese in hochreiner Form zu gewinnen, dadurch gekennzeichnet, daß das zu reinigende Gas in ein Vakuumsystem mit einer auf cryogenen Temperaturen von -100° C bis -200° C befindlichen Kaltfläche eines Kondesators (3) geleitet wird, an welcher das zu reinigende Gas in Form dünner· Schichten ausfriert, während die leichter flüchtigen Verunreinigungen gasförmig kontinuierlich aus dem Vakuumsystem abgezogen werden, wonach das ausgefrorene zu reinigende Gas als hochreines Produkt aus dem Vakuumsystem entfernt wird.

2. Verfahren nach Anspruch 1,
   dadurch gekennzeichnet,
   daß die leichter flüchtigen Bestandteile mittels einer Gastransfervakuumpumpe (5) abgezogen werden.

3. Verfahren nach Anspruch 1 oder 2,
   dadurch gekennzeichnet,
   daß die Kaltfläche des Kondensators mittels einer geregelten Kühlung durch flüssigen Stickstoff auf den cryogenen Temperaturen gehalten wird.

4. Verfahren nach einem der Ansprüche 1 bis 3,
   dadurch gekennzeichnet,
   daß das zu reinigende Gas ein Gas aus der Gruppe Silan, Disilan, Dichlorsilan, German, Boran, Arsin, Chlorwasserstoff, Ammoniak und Tetrafluormethan ist, während die zu entfernenden Verunreinigungen aus einem oder mehreren Gasen der Gruppe Wasserstoff, Stickstoff, Sauerstoff, Edelgase, Kohlenwasserstoffe, Kohlendioxid und Kohlenmonoxid bestehen.

**Claims**

1. Method of removing more easily volatile pollutants to below the analytical detection limit from gases, in order to obtain the latter in highly pure form, characterized in that the gas to be purified is led into a vacuum system having a cold surface of a condenser (3), which surface is at cryogenic temperatures of -100° C to -200° C and on which the gas to be purified freezes out in the form of thin layers while the more easily volatile pollutants are drawn off continuously from the vacuum system, after which the frozen-out gas to be purified is removed as a highly pure product from the vacuum system.

2. Method according to Claim 1, characterized in that the more easily volatile components are drawn off by means of a gas transfer vacuum pump (5).

3. Method according to Claim 1 or 2, characterized in that the cold surface of the condenser is maintained at the cryogenic temperature by means of controlled cooling by liquid nitrogen.

4. Method according to one of Claims 1 to 3, characterized in that the gas to be purified is a gas from the group of silane, disilane, dichlorosilane, germane, borane, arsine, hydrogen chloride, ammonia and tetrafluoromethane, while the pollutants to be removed consist of one or more gases of the group of hydrogen, nitrogen, oxygen, noble gases, hydrocarbons, carbon dioxide and carbon monoxide.

## Revendications

1. Procédé pour séparer des polluants facilement volatiles pour arriver en-dessous des limites de l'analyse, polluants contenus dans des gaz, pour obtenir des gaz à l'état très pur, procédé caractérisé en ce que :
on envoie le gaz à purifier dans un système à vide ayant une surface froide de condensateur (3) à des températures cryogéniques de -100° C à -200° C, surface sur laquelle on gèle le gaz à purifier sous la forme de couches minces pendant que l'on extrait par le système à vide les polluants facilement volatiles, gazeux, de manière continue, et on évacue le gaz à purifier, gelé, sous la forme d'un produit très pur du système de vide.

2. Procédé selon la revendication 1, caractérisé en ce que les composants facilement volatiles sont extraits à l'aide d'une pompe à vide à transfert de gaz (5).

3. Procédé selon la revendication 1 ou 2, caractérisé en ce que la surface (3) du condenseur est maintenue à des températures cryogéniques par un refroidissement régulé avec de l'azote liquide.

4. Procédé selon l'une des revendications 1 à 3, caractérisé en ce que le gaz à purifier est un gaz appartenant au groupe formé par le silane, le disilane, le dichlorosilane, le germane, le borane, l'arsine, le chlorure d'hydrogène, l'ammoniac et le tétrafluorométhane alors que les polluants à éliminer se composent d'un ou plusieurs gaz du groupe formé par l'hydrogène, l'azote, l'oxygène, les gaz rares, les hydrocarbures, le dioxyde de carbone et le monoxyde de carbone.